# FASCICULE DE BREVET EUROPEEN

(11) **EP 1 870 181 B1**
(45) Date de publication et mention de la délivrance du brevet: **11.03.2009**
(21) Numéro de dépôt: 07110512.6
(22) Date de dépôt: 19.06.2007
(51) Int. Cl.: B21K 1/08, B23B 5/18, G01M 1/24

(54) **Procédé de fabrication d'un vilebrequin**
Verfahren zur Herstellung einer Kurbelwelle
Method of manufacturing a crankshaft

(30) Priorité: 22.06.2006 FR 0652604
(43) Date de publication de la demande: 26.12.2007
(73) Titulaire: Peugeot Citroën Automobiles SA, 78140 Vélizy-Villacoublay (FR)
(72) Inventeur: Morin, Jean Yves, 68260 Kingersheim (FR)
(74) Mandataire: Ménès, Catherine

(56) Documents cités:
- EP-A1- 0 268 724
- EP-A1- 0 278 037
- FR-A1- 2 761 129
- GB-A- 715 764
- JP-A- 1 241 348
- JP-A- 2 041 730
- US-A- 2 746 299
- US-A- 3 905 116

## Description

L'invention concerne un procédé de fabrication d'un vilebrequin selon le préambule de la revendication 1 (voir par exemple EP-A-0 268 724) dans lequel on produit une pièce brute par forgeage et ébarbage, et dans lequel on usine ensuite cette pièce brute pour former des paliers.

La fabrication d'un vilebrequin consiste à fabriquer une pièce brute par forgeage et ébarbage, de manière à respecter des spécifications de type géométriques de cette pièce brute. Le forgeage ou estampage consiste à mettre la pièce en forme avec une presse, l'ébarbage consiste à supprimer une bavure résultant de l'opération de forgeage.

La pièce brute est ensuite usinée pour former ses paliers et pour l'équilibrer. Ceci peut être effectué en usinant d'abord les paliers concentriquement à axe de la pièce brute défini géométriquement, puis en équilibrant la pièce par réalisation de perçages dans des zones correspondant à des contrepoids, ces zones étant identifiées sur une machine spéciale de mesure de balourd.

A l'issue de cet équilibrage, le vilebrequin a un axe d'inertie qui coïncide avec son axe géométrique. Le nombre de trous d'équilibrage à réaliser est d'autant plus important que la précision de la pièce brute est faible.

Dans le cas où les mesures de balourd révèlent qu'un nombre de trous trop important doit être réalisé pour équilibrer le vilebrequin, la pièce est mise au rebut.

Afin de limiter la quantité de pièces rebutées, les paliers peuvent être usinés concentriquement à un axe dit moyen de la pièce brute, en vue de réduire le nombre de trous à effectuer pour l'équilibrage.

Dans ce cas, la position de l'axe d'inertie par rapport à l'axe géométrique est mesurée et relevée sur plusieurs pièces d'un échantillon d'un lot de pièces brutes, ce qui correspond à une étape dite d'apprentissage. L'axe moyen est ensuite défini comme correspondant à la moyenne des axes d'inerties des pièces mesurées.

L'usinage d'un pièce brute de ce lot consiste à la positionner dans une machine relativement à son axe géométrique, et à réaliser à chaque extrémité de cette pièce brute, c'est-à-dire côté queue et côté plateau, un point de centre correspondant à l'axe moyen, dont la position a été définie par rapport à celle de l'axe géométrique.

La pièce est ensuite montée dans une machine de tournage, concentriquement à l'axe moyen défini par les points de centre, ce qui permet de tourner les paliers coaxialement à l'axe moyen qui est normalement relativement proche de son axe d'inertie réel.

Le balourd de la pièce est identifié ensuite par mesure, après quoi le vilebrequin est équilibré en effectuant des perçages dont les positions et les profondeurs sont définies par la mesure de balourd de ce vilebrequin.

Ce procédé permet de réduire la quantité de trous d'équilibrage à percer, cependant, il implique une gestion précise des lots de pièces brutes, chaque lot devant être le plus homogène possible, et devant par conséquent correspondre à des pièces forgées avec un même outillage et durant une même campagne au cours de laquelle il n'y a pas eu de réglages importants.

En cas de réglages importants, les pièces forgées après ce réglage doivent être considérées comme faisant partie d'un nouveau lot de pièces brutes, ce qui nécessite de réaliser une nouvelle campagne d'apprentissage.

Le but de l'invention est de proposer un procédé fabrication de vilebrequin qui remédie aux inconvénients ci-dessus.

A cet effet, l'invention a pour objet un procédé de fabrication d'un vilebrequin comme défini dans la revendication 1.

L'invention concerne également un procédé tel que défini ci-dessus, dans lequel la position de l'axe d'inertie est déterminée par rapport à un axe géométrique de la pièce brute, et dans lequel si les mesures de balourd révèlent un écart trop important entre la position de l'axe d'inertie et l'axe géométrique, la pièce brute est redressée à chaud avant réalisation des points de centrage.

L'invention concerne également un procédé tel que défini ci-dessus, dans lequel la mesure de balourd est effectuée avec une machine spéciale de type "cage d'écureuil", en positionnant cette pièce brute dans une cage de cette machine de manière à aligner l'axe géométrique de cette pièce brute avec la cage, et dans lequel la cage est mise en rotation sur des galets équipés de capteurs d'efforts pour déterminer le balourd par analyse des données fournies par ces capteurs lorsque la cage tourne.

L'invention concerne également un procédé tel que défini ci-dessus, dans lequel les points de centrage sont réalisés en positionnant la pièce brute dans une machine de centrage, en alignant l'axe d'inertie à partir des données de mesure de l'axe d'inertie, et en réalisant les points de centrage au moyen de poinçons montés mobiles sur des vérins.

L'invention concerne également un procédé tel que défini ci-dessus, dans lequel la pièce brute est positionnée dans la machine de centrage au moyen de sièges de centrage mobiles sur lesquels viennent en appui des surfaces de référence de la pièce brute qui sont représentatives de son axe géométrique, et en déplaçant des parties mobiles des sièges de centrage pour aligner la pièce brute selon son axe d'inertie.

L'invention concerne également un procédé tel que défini ci-dessus, dans lequel en cas d'écart trop important entre l'axe d'inertie et l'axe géométrique, les machines de forgeage et/ou d'ébarbage sont réglées en conséquence.

L'invention sera maintenant décrite plus en détail, et en référence aux figures annexées.
La figure 1 est une représentation schématique du procédé selon l'invention sous forme de schéma bloc ;
La figure 2 est une vue latérale d'un vilebrequin monté dans une machine de type cage d'écureuil pour déterminer son balourd conformément au procédé selon l'invention ;
La figure 3 est une vue latérale d'un poste de réalisation des points de centre d'un vilebrequin fabriqué conformément au procédé selon l'invention ;
La figure 4 est une vue de face d'une extrémité du poste de la figure 3 montrant les cales de réglage d'un siège de centrage.

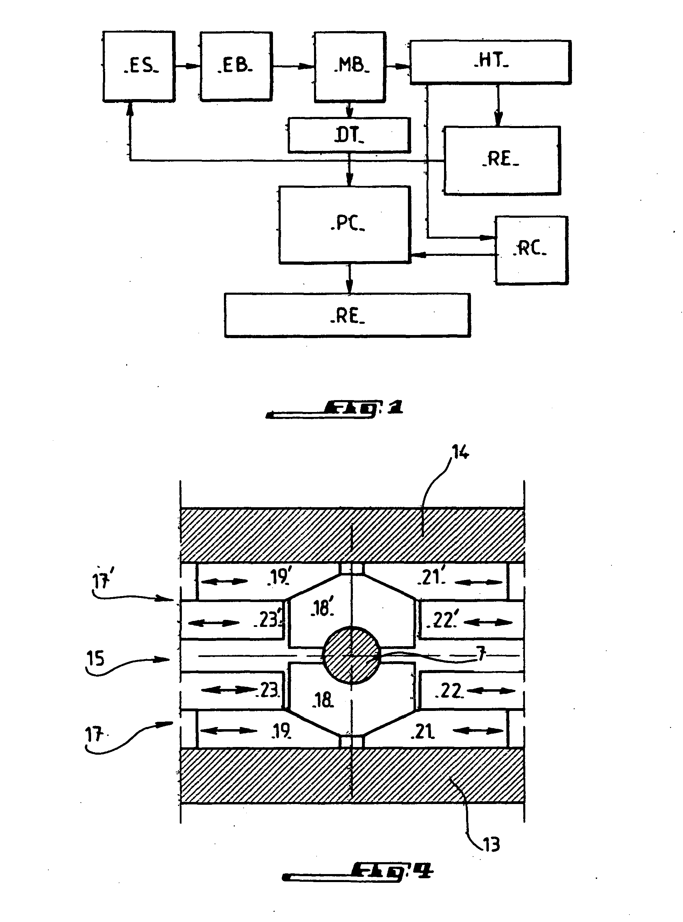

Selon l'invention qui est illustrée schématiquement en figure 1, une pièce brute est d'abord fabriquée par estampage et par ébarbage, ce qui correspond aux blocs ES et EB. Une mesure de balourd MB est effectuée directement après l'opération d'ébarbage EB pour déterminer la position de l'axe d'inertie de la pièce brute par rapport à la position de son axe géométrique.

La mesure de balourd MB réalisée directement après ébarbage, c'est-à-dire lorsque la pièce brute est encore chaude, permet de renvoyer la pièce pour la faire redresser à chaud, au bloc RC, si le balourd identifié est trop important, c'est-à-dire si l'axe d'inertie est trop éloigné de l'axe géométrique, ce qui correspond au bloc HT.

Si la position de l'axe d'inertie déterminée par la mesure du balourd se trouve dans une tolérance donnée, ce qui correspond au bloc DT, c'est-à-dire si l'axe d'inertie est espacé de l'axe géométrique d'une valeur inférieure à un seuil prédéterminé, alors, un point de centrage est réalisé à chaque extrémité de la pièce, au bloc PC, pour servir de référence à l'usinage des paliers.

Les points de centrage sont réalisés sur un poste dans lequel la position de la pièce brute est ajustée selon son axe d'inertie, c'est-à-dire de telle manière que son axe d'inertie coïncide avec un axe de la machine.

Lorsque ce positionnement a été effectué, un point de centrage est réalisé à chaque extrémité de la pièce brute, de telle manière que ces points de centrage coïncident avec l'axe d'inertie réel de la pièce brute, afin de servir de base pour usiner ultérieurement les paliers concentriquement à l'axe d'inertie.

Après réalisation des points de centre, la pièce brute est mise au refroidissement conformément à une courbe de température prédéterminée pour assurer des qualités mécaniques appropriées, ce qui correspond au bloc RE.

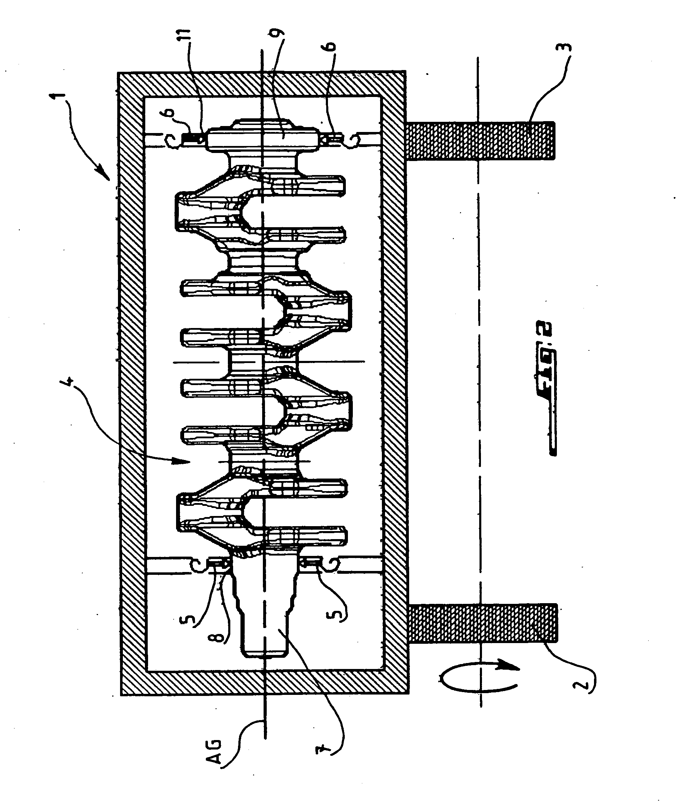

La mesure de balourd peut être effectuée avec une machine de type cage d'écureuil telle que celle qui est représentée en figure 2. Cette machine comprend une enceinte dite cage d'écureuil, repérée par 1, ayant une forme générale cylindrique et reposant sur des galets repérés par 2 et 3.

Le vilebrequin 4 à l'état de pièce brute est positionné dans la cage en étant centré par rapport celle-ci au moyen de deux mandrins, ou serrages concentriques, repérés par 5 et 6 équipant cette cage en étant situés à chacune de ses extrémités.

Le premier mandrin 5 qui est solidaire de la cage est situé au niveau d'une première extrémité de cette cage correspondant à celle dans laquelle est placée la queue de vilebrequin, repérée par 7. Cette queue de vilebrequin comprend une surface cylindrique de référence 8, concentrique à son axe géométrique, et sur laquelle le mandrin 5 est serré.

Le second mandrin 6 qui est solidaire de la cage est situé à une extrémité opposée, correspondant à une extrémité opposée du vilebrequin, appelée plateau et repérée par 9. Le plateau 9 comprend lui aussi une surface cylindrique de référence 11, concentrique à son axe géométrique, et sur laquelle le second mandrin 6 est serré.

Les surfaces de référence 8 et 11 définissent l'axe géométrique AG du vilebrequin, de sorte qu'après montage dans la cage 1 et serrage des deux mandrins 5 et 6, l'axe géométrique AG coïncide avec l'axe de révolution de la cage 1.

Le vilebrequin est également positionné angulairement par rapport à la cage en ayant par exemple une partie radiale en appui sur une pièce d'appui interne de la cage 1, non représentée. Cette indexation angulaire est réalisée avant serrage des mandrins 5 et 6.

Après montage du vilebrequin 4 dans la cage 1, celle-ci est positionnée sur les galets 2 et 3. A cet effet, elle comprend à chacune de ses extrémités une bande de roulement circulaire, concentrique à son axe de révolution.

La cage 1 repose sur ces galets grâce aux bandes de roulement, ce qui permet de la faire tourner autour de son axe de révolution qui coïncide avec l'axe géométrique AG du vilebrequin 4. Dans la figure 2 on a représenté deux galets, mais la machine en comporte avantageusement quatre, chaque bande de roulement reposant alors sur deux galets.

La mesure de balourd est effectuée au moyen de capteurs des efforts reçus par les galets. Chaque capteur est par exemple interposé entre le support d'un galet et un châssis non représenté sur lequel repose ce support.

Cette mesure consiste principalement à entraîner en rotation les galets 2 et 3 pour faire pivoter le vilebrequin autour de son axe géométrique AG et à relever les efforts reçus par chaque galet en fonction de la position angulaire de la cage 1, c'est-à-dire du vilebrequin 4.

Ces mesures permettent de déterminer le balourd du vilebrequin, ce qui revient à déterminer la position de l'axe d'inertie de ce vilebrequin par rapport à son axe géométrique.

Ces mesures ainsi que la détermination balourd et de la position de l'axe d'inertie sont avantageusement pilotées par une unité centrale dédiée qui est reliée à l'entraînement des galets et à leurs capteurs pour enregistrer les efforts relevés en fonction de la vitesse et de la fréquence de rotation.

Les caractéristiques du balourd et la position de l'axe d'inertie sont avantageusement directement fournis par cette unité centrale lorsque les mesures sont terminées.

L'axe d'inertie du vilebrequin peut avantageusement être défini sous forme des coordonnées polaires de l'intersection de cet axe d'une part avec un plan normal à l'axe géométrique AG et situé au niveau de la surface de référence 8, et d'autre part avec un autre plan normal à l'axe géométrique AG et situé au niveau de la surface de référence 11.

L'axe d'inertie peut également être considéré comme étant parallèle à l'axe géométrique AG, auquel cas, la détermination de la distance qui le sépare de l'axe géométrique AG, et de l'angle correspondant à l'orientation par rapport au vilebrequin d'un plan comprenant ces deux axes est suffisante.

Si le balourd est trop important, c'est-à-dire si l'axe d'inertie est trop éloigné de l'axe géométrique du vilebrequin, ce vilebrequin peut être envoyé à un poste de redressage, avec les paramètres déterminés à l'issue des mesures.

L'envoi à un poste de redressage à cet état des opérations est très avantageux du fait que le vilebrequin est encore chaud. Il peut ainsi valablement être redressé, par exemple par application d'efforts par une presse, avant de refroidir.

Il est à noter qu'à contrario, le redressage à froid d'un vilebrequin est problématique. En effet un redressage à froid génère des contraintes mécaniques internes dans le vilebrequin qui sont libérées lors de l'usinage des paliers, ce qui provoque à nouveau une déformation importante du vilebrequin qui remet complètement en cause son équilibrage.

Ainsi, à titre d'ordre de grandeur, le vilebrequin est réalisé dans un acier qui est en fusion à 1350°, il est estampé ou forgé à 1280 degrés environ, et il est redressé à 1100°, ce qui correspond à une perte de 180° entre forgeage et redressage.

Selon l'invention, le fait de procéder à un redressage à chaud permet d'éviter la création de contraintes internes, puisque les contraintes résultant éventuellement du redressage se dissipent durant le refroidissement, de sorte que l'usinage ultérieur des paliers ne peut pas provoquer une nouvelle déformation importante du vilebrequin.

A l'issue de cette opération de redressage, le vilebrequin peut directement être envoyé au poste de formage des points de centre qui va être détaillé plus bas, soit être à nouveau monté dans la cage 1 pour déterminer la position de son axe d'inertie.

Dans le cas où le balourd est trop important, les presses de forgeage et d'ébarbage peuvent être directement réglées en conséquence, ce qui est représenté par le bloc RE de la figure 1.

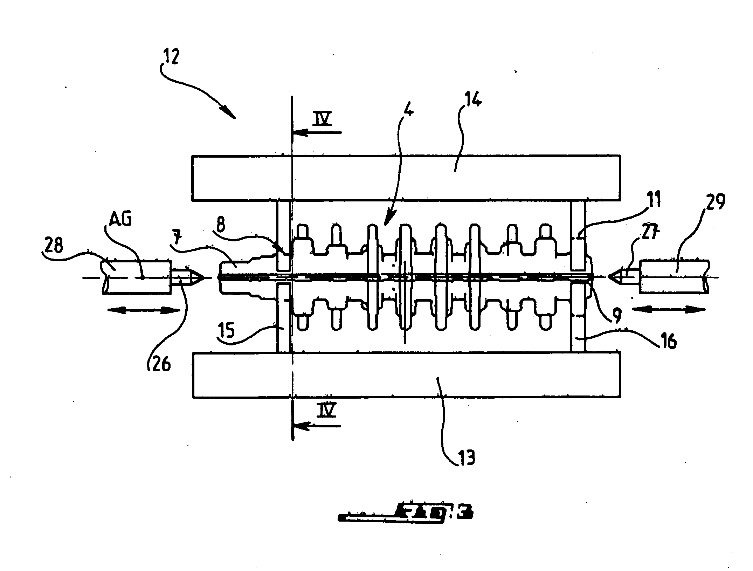

Les points de centre sont réalisés à un poste 12 qui est représenté en figure 3. Ce poste comprend un demi-châssis inférieur 13 et un demi-châssis supérieur 14, ainsi qu'un premier et un second sièges de centrages, repérés par 15 et 16, et destinés à recevoir respectivement la queue du vilebrequin et son plateau.

Comme visible sur la figure 3, les sièges de centrage 15 et 16 reçoivent respectivement les surfaces cylindriques de référence 8 et 11 du vilebrequin. Ceci permet de déplacer ces sièges pour positionner l'axe d'inertie du vilebrequin en alignement avec le poste de centrage, la position de l'axe d'inertie étant donnée par rapport à celle de l'axe géométrique AG à l'issue des mesures de balourd.

Le siège 15 est représenté en vue de face dans la figure 4. Il comprend une partie inférieure 17 incluant un support 18 reposant sur deux coins, repérés par 19 et 21. Ces coins sont mobiles transversalement par rapport à l'axe du vilebrequin, en glissant le long du demi-châssis inférieur sur lequel ils reposent.

Le support 18 comprend une partie inférieure pourvue de deux faces d'appui usinées en V, selon des pentes identiques à celles des surfaces supérieures des coins 19 et 21 sur lesquelles ce support vient en appui.

Un déplacement dans lequel les coins sont rapprochés l'un de l'autre permet d'élever le support 18, et donc la queue 7 du vilebrequin 4 portée par ce support. Un déplacement dans lequel les coins sont éloignés l'un de l'autre permet d'abaisser le support 18, et donc la queue 7 du vilebrequin.

Un déplacement dans lequel les coins sont déplacés transversalement dans le même sens permet de décaler transversalement la queue 7 du vilebrequin.

Deux brides de blocage, repérées par 22 et 23 reposent respectivement sur les coins 19 et 21 et sont mobiles transversalement pour immobiliser le support 18 une fois que sa position a été ajustée par déplacement des coins.

De manière analogue, le siège 15 comprend une partie supérieure 17' incluant elle aussi un support, deux coins et deux brides qui portent les mêmes références que celles de la partie inférieure, complétées par le signe prime, cette partie supérieure 17' étant portée par le demi-châssis supérieur 14.

La partie inférieure 17 et la partie supérieure 17' sont symétriques l'une de l'autre par rapport à un plan médian horizontal comprenant sensiblement l'axe AG.

L'ajustement de la position de la queue 7 du vilebrequin 4, dans le poste de formage des points de centre consiste à déplacer les coins 19 et 21 ainsi que 19' et 21' pour régler verticalement et transversalement la position de cette queue 7, puis à serrer les brides de blocage 22, 23, 22' et 23' sur les supports 18 et 18' pour bloquer la queue 7 en position.

Le siège de centrage 16 comprend les mêmes composants que le siège 15 pour ajuster avec précision la position du plateau 9 en se référant à la surface cylindrique 11 du vilebrequin.

La formation des points de centre sur le poste 12 consiste ainsi, dans un premier temps, à ajuster la position de la queue et du plateau du vilebrequin dans le poste 12 comme indiqué ci-dessus, pour aligner son axe d'inertie par rapport au poste 12.

Comme visible sur la figure, ce poste comprend deux poinçons, repérés par 26 et 27 et portés respectivement par les vérins 28 et 29, en étant situés en vis-à-vis, respectivement de la queue 7 et du plateau 11 du vilebrequin 4.

Après alignement du vilebrequin dans le poste 12, et serrage des quatre brides 22, 23, 22' et 23', les vérins 28 et 29 sont actionnés pour être rapprochés des extrémités du vilebrequin pour réaliser un point de centre à chacune de ces extrémités, coïncidant avec son axe d'inertie tel que défini à l'issue de l'opération de mesure de balourd.

Le vilebrequin est ensuite dirigé vers la cellule de refroidissement qui assure sa structure et sa dureté.

L'invention apporte notamment les avantages suivants :

Elle permet de réduire le coût de fabrication des vilebrequins sans qu'il soit nécessaire de procéder à un suivi des lots de pièces pour déterminer valablement leur axe moyen.

Ceci permet de supprimer toutes les contraintes liées à la gestion et à l'expédition des pièces brutes. De plus, l'opération d'équilibrage dynamique située en amont des modules d'usinage est supprimée.

L'invention permet de plus de diminuer le taux de rebut puisqu'en cas de détection d'un axe d'inertie trop éloigné de l'axe géométrique, la pièce brute peut encore être redressée à chaud au lieu de devoir être rebutée.

En cas de dérive trop importante de la position de l'axe d'inertie, des réglages correspondant peuvent immédiatement être effectués sur la chaîne de forgeage et d'ébarbage, comme par exemple le déport des matrices ou le jeu entre les poinçons d'ébarbage.

L'usinage des paliers est réalisé en référence aux points de centre, de sorte qu'après usinage, ces paliers sont nécessairement concentriques à l'axe d'inertie de la pièce brute.

Après usinage, il peut éventuellement être nécessaire d'équilibrer légèrement le vilebrequin. Mais le nombre de trous à réaliser est nécessairement très faible : les paliers ayant été réalisés concentriquement à l'axe d'inertie réel de la pièce brute, leur usinage ne peut provoquer qu'un très faible déplacement de cet axe d'inertie.

En plus des contrôles dimensionnels, un contrôle fréquentiel de balourd (valeur portée au plan de brut) peut être réalisé au poste de mesure, de sorte que les notions de flèche et de pliage du vilebrequin n'ont plus d'utilité.

Les contrôles de position des faces et rayons des contrepoids qui restent bruts de forgeage peuvent être réalisés à partir des points de centre, c'est-à-dire en se référant à l'axe d'inertie qui correspond à l'axe de rotation effectif du vilebrequin une fois usiné. Ceci permet de garantir que tous les vilebrequins contrôlés passent effectivement dans les carters où ils doivent être montés.

## Revendications

1. Procédé de fabrication d'un vilebrequin (4) dans lequel on produit une pièce brute (4) par forgeage (ES) et ébarbage (EB), et dans lequel on usine ensuite cette pièce brute (4) pour former des paliers, et dans lequel on effectue une mesure de balourd (MB) de la pièce brute (4) avant usinage, et on réalise à chaque extrémité (7, 9) de cette pièce brute des points de centre coïncidant avec un axe d'inertie de cette pièce brute déterminé sur la base des mesures de balourd, et dans lequel les usinages des paliers sont réalisés concentriquement à cet axe d'inertie grâce aux points de centrage **caractérisé en ce que** l'on effectue la mesure de balourd lorsque la pièce brute est encore chaude.

2. Procédé selon la revendication 1, dans lequel la position de l'axe d'inertie est déterminée par rapport à un axe géométrique (AG) de la pièce brute (4), et dans lequel si les mesures de balourd révèlent un écart trop important entre la position de l'axe d'inertie et l'axe géométrique (AG), la pièce brute (4) est redressée à chaud (RC) avant réalisation des points de centrage (PC).

3. Procédé selon la revendication 1 ou 2, dans lequel la mesure de balourd est effectuée avec une machine spéciale de type "cage d'écureuil", en positionnant cette pièce brute (4) dans une cage (1) de cette machine de manière à aligner l'axe géométrique de cette pièce brute (4) avec la cage (1), et dans lequel la cage (1) est mise en rotation sur des galets (2, 3) équipés de capteurs d'efforts pour déterminer le balourd par analyse des données fournies par ces capteurs lorsque la cage (1) tourne.

4. Procédé selon l'une des revendications 1 à 3, dans lequel les points de centrage sont réalisés en positionnant la pièce brute (4) dans une machine de centrage (12), en alignant l'axe d'inertie à partir des données de mesure de l'axe d'inertie, et en réalisant les points de centrage au moyen de poinçons montés mobiles sur des vérins.

5. Procédé selon la revendication 4 dans lequel la pièce brute (4) est positionnée dans la machine de centrage au moyen de sièges de centrage mobiles (15, 16) sur lesquels viennent en appui des surfaces de référence (8, 11) de la pièce brute (4) qui sont représentatives de son axe géométrique, et en déplaçant des parties mobiles (18, 18') des sièges de centrage (15, 16) pour aligner la pièce brute (4) selon son axe d'inertie.

6. Procédé selon la revendication 2, dans lequel en cas d'écart trop important entre l'axe d'inertie et l'axe géométrique (AG), les machines de forgeage et/ou d'ébarbage sont réglées en conséquence.

## Claims

1. Method for manufacturing a crankshaft (4) in which a blank (4) is produced by forging (ES) and deburring (EB), and in which said blank (4) is then machined to form bearings, and in which an unbalance measurement (MB) of the blank (4) is carried out before machining and at each end (7, 9) of this blank centring points are produced which coincide with an axis of inertia of said blank, determined on the basis of the unbalance measurements, and in which the machining of the bearings is carried out concentrically to this axis of inertia using the centring points, **characterized in that** the unbalance measurement is carried out when the blank is still hot.

2. Method according to Claim 1, in which the position of the axis of inertia is determined relative to a geometric axis (AG) of the blank (4) and in which, if the unbalance measurements reveal too great a difference between the position of the axis of inertia and the geometric axis (AG), the blank (4) is hot-straightened (RC) before producing the centring points (PC).

3. Method according to Claim 1 or 2, in which the unbalance measurement is carried out by a specific machine of the "squirrel cage" type, by positioning said blank (4) into a cage (1) of this machine so as to align the geometric axis of said blank (4) with the cage (1), and in which the cage (1) is set in rotation on rollers (2, 3) provided with force sensors to determine the unbalance by analysing the data provided by said sensors when the cage (1) rotates.

4. Method according to one of Claims 1 to 3, in which the centring points are implemented by positioning the blank (4) in a centring machine (12), by aligning the axis of inertia using measurement data of the axis of inertia, and producing the centring points by means of punches movably mounted on actuating cylinders.

5. Method according to Claim 4, in which the blank (4) is positioned in the centring machine by means of mobile centring seats (15, 16), against which reference surfaces (8, 11) of the blank (4), which represent the geometric axis thereof, bear and by displacing the mobile parts (18, 18') of the centring seats (15, 16) to align the blank (4) according to its axis of inertia.

6. Method according to Claim 2, in which in the event of too great a difference between the axis of inertia and the geometric axis (AG), the forging and/or deburring machines are adjusted accordingly.

## Patentansprüche

1. Verfahren zur Herstellung einer Kurbelwelle (4), bei dem ein Rohling (4) durch Schmieden (ES) und Putzen (EB) hergestellt wird und bei dem danach dieser Rohling (4) bearbeitet wird, um Lager zu bilden, und bei dem vor der Bearbeitung eine Unwuchtmessung des Rohlings (4) durchgeführt wird und an jedem Ende (7, 9) dieses Rohlings Zentrierpunkte gebildet werden, die mit einer Trägheitsachse dieses Rohlings zusammenfallen, die auf Grundlage der Unwuchtmessungen bestimmt wird, und bei dem die Bearbeitungen der Lager dank der Zentrierpunkte konzentrisch zu dieser Trägheitsachse erfolgen, **dadurch gekennzeichnet, dass** die Unwuchtmessung durchgeführt wird, während der Rohling noch warm ist.

2. Verfahren nach Anspruch 1, bei dem die Position der Trägheitsachse bezüglich einer geometrischen Achse (AG) des Rohlings (4) bestimmt wird und bei dem der Rohling (4) vor Bildung der Zentrierpunkte (PC) warmgerichtet wird (RC), wenn die Unwuchtmessungen einen zu großen Abstand zwischen der Position der Trägheitsachse und der geometrischen Achse (AG) offenbaren.

3. Verfahren nach 1 oder 2, bei dem die Unwuchtmessung mit einer Spezialmaschine der "Käfig"-Bauart durchgeführt wird, indem dieser Rohling (4) in einem Käfig (1) dieser Maschine zur Ausrichtung der geometrischen Achse dieses Rohlings (4) auf den Käfig (1) positioniert wird, und bei dem der Käfig (1) auf Rollen (2, 3) in Drehung versetzt wird, die mit Kraftsensoren versehen sind, um die Unwucht durch Analyse der von diesen Sensoren gelieferten Daten zu bestimmen, wenn sich der Käfig (1) dreht.

4. Verfahren nach einem der Ansprüche 1 bis 3, bei dem die Zentrierpunkte durch Positionierung des Rohlings (4) in einer Zentriermaschine (12), durch Ausrichtung der Trägheitsachse anhand der Messdaten der Trägheitsachse und durch Bildung der Zentrierpunkte mittels beweglich an Zylindern angebrachten Lochstanzen gebildet werden.

5. Verfahren nach Anspruch 4, bei dem der Rohling (4) mittels beweglicher Zentriersitze (15, 16) positioniert wird, an denen Bezugsflächen (8, 11) des Rohlings (4), die seine geometrische Achse darstellen, zur Anlage kommen, und wobei bewegliche Teile (18, 18') der Zentriersitze (15, 16) verschoben werden, um den Rohling (4) entlang seiner Trägheitsachse auszurichten.

6. Verfahren nach Anspruch 2, bei dem bei einem zu großen Abstand zwischen der Trägheitsachse und der geometrischen Achse (AG) die Schmiede- und Putzmaschinen entsprechend eingestellt werden.
